# EUROPEAN PATENT APPLICATION

(11) **EP 3 569 063 A1**
(43) Date of publication of application: **20.11.2019**
(21) Application number: 19174748.4
(22) Date of filing: 15.05.2019
(51) Int. Cl.: A01M 23/02

(54) **ANIMAL TRAP**

(30) Priority: 16.05.2018 IT 201800005417
(71) Applicant: Bonato, Riccardo, 36015 Schio (VI) (IT)
(72) Inventor: Bonato, Riccardo, 36015 Schio (VI) (IT)
(74) Representative: Bonini, Ercole

(57) **Abstract**

Multifunction device (1; 30) comprising a first shaped body (2; 30a) provided with the following elements: a base (3) designed to be rested on the ground; a supporting surface (4) opposite the resting base (3) and parallel to the resting base (3) itself, the supporting surface (4) being delimited by a perimeter edge (7) projecting in the opposite direction with respect to the resting base (4) and being configured to support an object, preferably a vase (V); a housing (8) obtained between the resting base (3) and the supporting surface (4) and suited to receive a second shaped body (9; 32) reversibly coupled therewith. The multifunction device (1; 30) furthermore comprises a second shaped body (9; 32) that is removable and configured in such a way that the following elements are defined inside it: at least one first chamber (13) suited to accommodate at least one animal trap (T); at least one second chamber (14) communicating with the first chamber (13) through a first opening (15) and communicating with the external environment through at least one second opening (16; 31). The first opening (15) and the at least one second opening (16; 31) of the second shaped body (9; 32) extend according to distinct axes (X, Y, Z), in such a way as to define a non-rectilinear path between the first opening (15) and the at least one second opening (16; 31). The second shaped body (9; 32) is provided with a plurality of ribs (18) spaced from one another, each one of which extends starting from the base surface (20) of the second shaped body (9; 32) over the entire width of the non-rectilinear path, defining on the base surface (20) a plurality of zones (19a, 19b, 19c) that are adjacent to and distinct from one another.

## Description

The present invention concerns a multifunction device particularly but not exclusively suited to be positioned in restaurants, dining places and indoor and outdoor public and private places.

Various types of baits for animals are known, in particular for rodents, including technologically advanced traps and/or baits poisoned with zinc sulfide or thallium sulfate.

More specifically, as far as closed places are concerned, deratization is usually carried out by resorting to poisonous gases, for example hydrocyanic acid or methyl bromide, or by means of technological traps, such as ultrasound deratization devices.

Many animals, and rats in particular, tend to infest places with bad hygienic conditions and lots of food, for example dining places.

To avoid rat infestation, the owners of dining places use mechanical or electronic traps in order to keep rats away from food, or poisoned baits to kill them.

The drawback that arises in these cases lies in that customers tend to avoid places where there are animal traps, with consequent economical damage for the owners of such restaurants.

On the other hand, if the owners of dining places avoided using animal traps, they could not stop the animals, in particular rats, from infesting their property, and these would eat the stored food, in addition to carrying diseases.

The present invention intends to eliminate the above mentioned drawbacks. More specifically, it is one object of the present invention to provide a device that serves the function of an animal trap but does not allow such a trap to be visible to the naked eye.

The object specified above is achieved by the present invention, which concerns a multifunction device carried out according to the main claim. Further details and characteristics of the invention are specified in the dependent claims.

Advantageously, the multifunction device according to the invention comprises a first shaped body that looks like a vase saucer, which is associated with a second removable shaped body containing one or more animal traps.

Still advantageously, the second shaped body belonging to the multifunction device according to the invention is provided with reversible fastening means designed to prevent the accidental disconnection of the second shaped body from the housing in which it is inserted and therefore prevent any accidental contact with the poisoned bait or baits contained therein. Consequently, said fastening means constitute an important protection element against any tampering action on the device, especially by children.

The object described above and the said advantages will be highlighted in greater detail in the description of a preferred embodiment of the invention, provided by way of example without limitation with reference to the attached drawings, wherein:
- Figure 1 shows an exploded axonometric view of the multifunction device according to the invention;
- Figure 2 shows an axonometric view of the detail of the removable body belonging to the multifunction device shown in Figure 1;

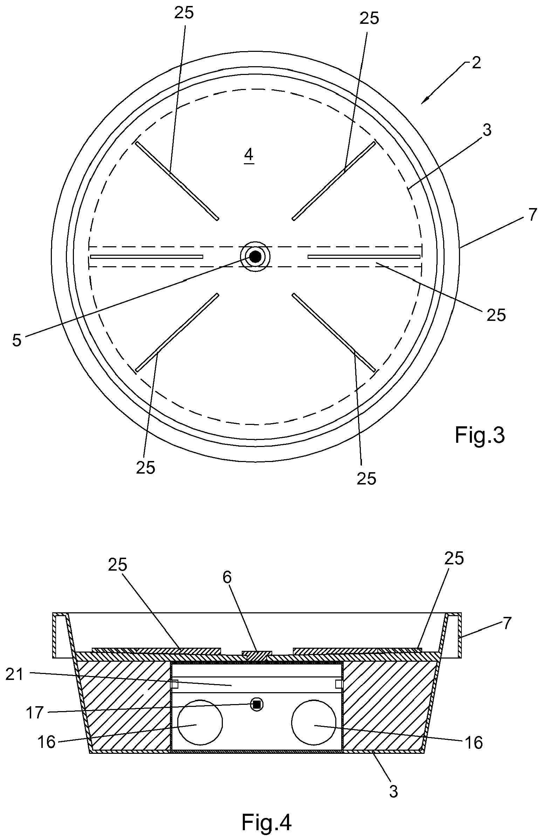

- Figure 3 shows a plan view of the multifunction device shown in Figure 1;
- Figure 4 shows a sectional view of the multifunction device shown in Figure 1 when assembled;
- Figure 5 shows a different sectional view of the device shown in Figure 1;
- Figure 6 shows a plan view of the second shaped body belonging to the multifunction device shown in Figure 1;
- Figure 7 shows a plan view of a variant embodiment of the second shaped body belonging to the multifunction device that is the subject of the invention;
- Figure 8 shows an axonometric view of the multifunction device shown in Figure 1 when assembled and supporting a vase that rests thereon.

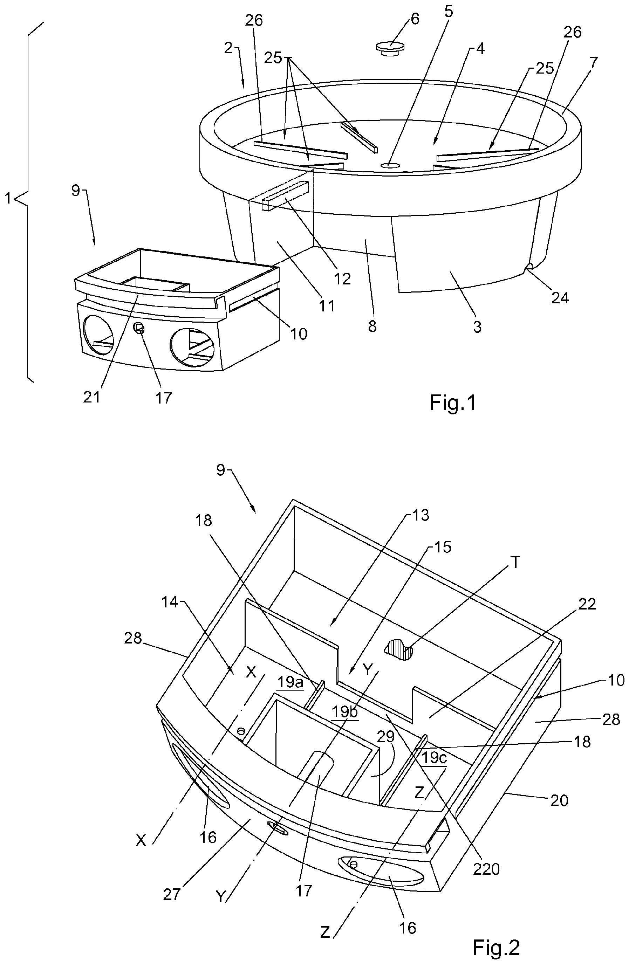

With reference to Figure 1, it is possible to observe a multifunction device, indicated as a whole by **1,** which comprises a first shaped body **2** provided with a base **3** suited to be rested on the ground and with a supporting surface **4** substantially parallel to it.

With reference to Figure 1, it is possible to observe that the resting base **3** is substantially circular; however, according to a variant embodiment not illustrated in the figures, the resting base **3,** and in general the entire device **1,** can have a different shape, for example a square or rectangular shape. Regarding the supporting surface **4,** as shown in Figure 1, it has a truncated cone-shaped outline with taper directed towards the resting base **3** and a drainage opening **5** at the centre. This drainage opening **5** is usually closed by means of a manually removable plug **6.**

Advantageously, the drainage opening **5** allows the outflow of the liquids, in particular water, that accumulate on the supporting surface **4.**

The first shaped body **2** of the multifunction device **1** is configured as a vase saucer.

Regarding the first shaped body **2,** making reference to Figures 1, 5 and 6 it can be seen that the plug **6** obstructs a first channel **23** that extends vertically and is connected to a second horizontal channel **24.** Advantageously, the first and the second channel, respectively **23** and **24,** allow the drainage of the water that accumulates on the supporting surface **4,** making it flow towards the outside.

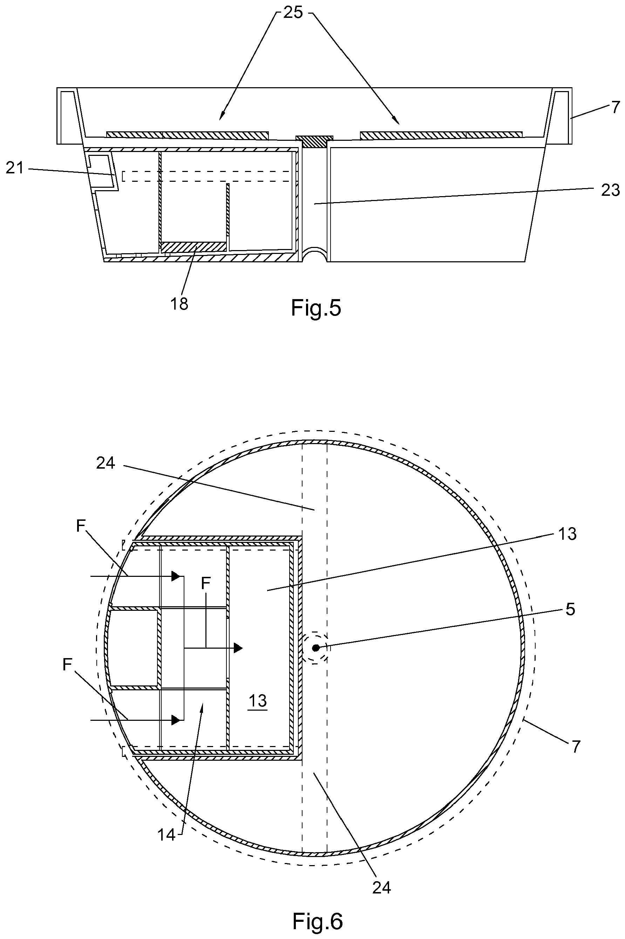

As can be seen in Figures 1 and 5, the supporting surface **4** is delimited by a perimeter edge **7** having a circular outline and projecting in the opposite direction with respect to the resting base **3.** It should be noted that the same perimeter edge **7** of the multifunction device **1,** visible in Figures 1 and 5, has an inclined outline, which allows the excess water to drip towards the ground. As can be observed in Figure 1, the multifunction device **1** furthermore comprises a housing **8** obtained between the supporting surface **4** and the resting base **3** and suited to receive a second shaped body **9** coupled therewith.

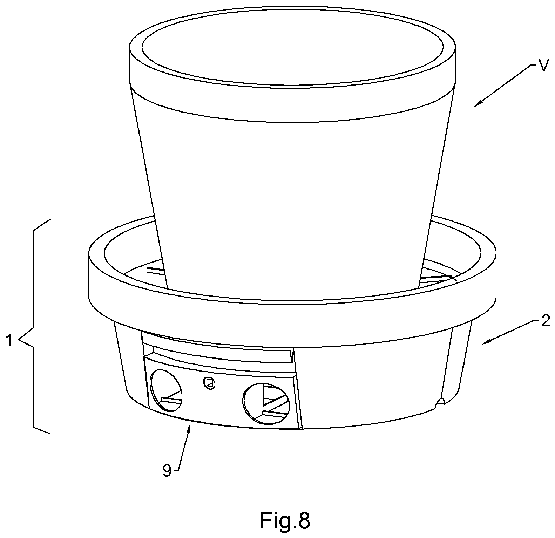

With reference to Figures 1 and 8, it can be observed that the supporting surface **4** is provided with a plurality of ribs **25** that are spaced from one another and extend radially, with increasing thickness towards the drainage opening **5.**

As can be observed in Figures 1 and 8, each rib **25** extends starting from the supporting surface **4** and is provided with a free surface **26** suited to support an object that rests thereon. Preferably but not necessarily, the multifunction device **1** is suited to support a vase **V** (visible in Figure 8) that rests thereon. As can be observed in Figure 1, the coupling between the housing **8** and the second shaped body **9** is of the reversible type and takes place through a sliding movement by the insertion of the grooves **10** in the lateral projections **11** that extend from the side walls **12** of the housing **8.**

The second shaped body **9,** therefore, in inserted in the housing **8** through a sliding coupling movement, similarly to what happens in the case of a generic drawer.

The second shaped body **9** is therefore a removable body and, as shown in Figure 2, the following elements can be identified inside it:
- a first chamber **13** suited to house one or more traps or baits for animals **T;**
- a second chamber **14** placed in communication with the first chamber **13** through a first opening **15** and with the external environment through two second openings **16.** More specifically, in Figures 1 and 2 it can be observed that the two second openings **16** are represented by two through holes spaced from each other.

According to a variant embodiment not represented in the figures, the number of the first chambers may even be higher than one and each of the first chambers may house one trap or bait for animals.

Furthermore, the number of second chambers may be higher than one and the second openings communicating with the external environment may be more than two or just one.

Furthermore, according to a further variant embodiment not represented in the figures, the shape of the openings may be other than circular, for example square or ellipsoidal.

With reference to Figure 2, the first opening **15** and the two second openings **16** extend according to distinct and substantially parallel axes, respectively **X, Y, Z,** in such a way as to define a zigzag path between the first opening **15** and the two second openings **16** (the zigzag path can be seen in Figure 6 and is defined as indicated by the arrows **F**)**.**

The expression "zigzag path" is used to indicate any non-rectilinear path following a direction defined by a broken line.

According to a variant embodiment not illustrated herein, zigzag paths different from the one shown in the figures are therefore possible.

Advantageously, said zigzag path prevents people, especially children, from introducing their fingers in the second openings **16,** reaching the animal trap or bait **T** and tampering with it.

With reference to Figure 2, the second shaped body **9** substantially has the shape of a drawer provided with a base surface **20,** a front surface **27** and two side surfaces **28** that extend starting from the base surface **20.** In this embodiment, the two openings **16** have been obtained in the front surface **27.**

With reference to Figure 1, the multifunction device **1** is also provided with fastening means, in this case represented by a lock **17.** Advantageously, the lock **17** prevents the opening and the accidental disconnection of the second shaped body **9** from the housing **8** in which it is inserted.

In the present embodiment, the lock **17** is positioned on a front wall **27** of the second shaped body **9,** visible in Figure 2, is cylindrical in shape and is housed inside a plurality of walls **29.** However, variant embodiments not represented herein are also possible, in which the fastening means are different from the lock **17.**

With reference to Figure 2, it can be observed that inside the second shaped body **9** there is a plurality of ribs **18** defining a plurality of adjacent and distinct areas in the base **20.** In this specific case, the areas are three and they comprise:
- a first area **19a** delimited by two ribs **18,** by a side wall **28** and by a partition **22;**
- a second area **19b,** adjacent to the first area **19a,** delimited by two ribs **18** and by a wall section **220** with reduced height obtained in the partition **22;**
- a third area **19c,** adjacent to the second area **19b,** delimited by the partition **22** and by a rib **18** (the latter not visible in Figure 2).

Again in Figure 2, it can be observed that the ribs **18** are spaced from one another and extend starting from the base surface **20** of the second shaped body **9** over the entire width of the zigzag path and orthogonally to said path. Advantageously, the ribs **18** prevent the liquids, and in particular water, from spreading inside the second shaped body **9** and therefore from penetrating in the first chamber **13** where there is the animal trap, so that the water does not wet the bait used for said trap.

The same applies in a similar manner to the first opening **15.** In fact, as can be seen in Figure 2, this is obtained in a partition **22,** which separates the first chamber **13** from the second chamber **14.**

Figure 2, in fact, shows that the first opening **15** is made in a higher position with respect to the base surface **20** of the shaped body **9,** creating the reduced height wall section **220** that prevents liquid substances, and in particular water, from spreading inside the first chamber **13** and damaging the animal trap **T.**

With reference to Figures 1 and 5, the second shaped body **9** is advantageously provided with a grip **21** that facilitates its extraction from the housing **8** when necessary.

Furthermore, advantageously, in Figure 5 it can be observed that the base surface **20** of the second shaped body **9** has decreasing inclination from the first chamber **13** towards the second chamber **14,** in such a way as to further prevent the outflow of water from the second opening **16** towards said inner first chamber **13.**

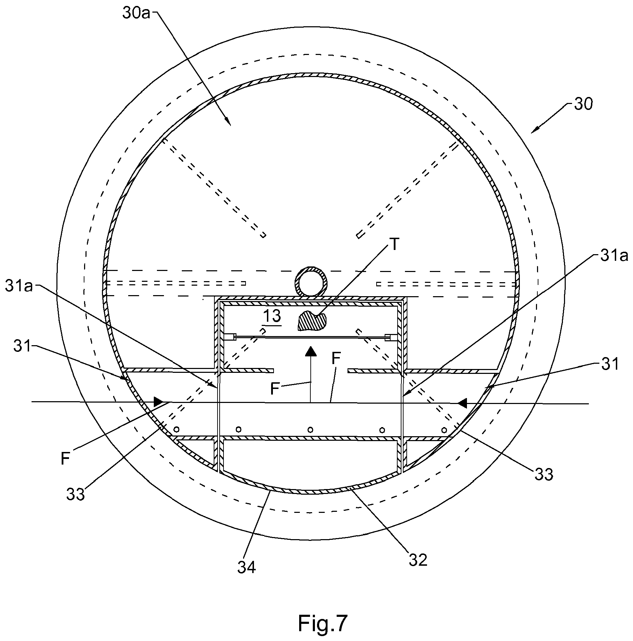

With reference to Figure 7, it shows a variant embodiment of the multifunction device according to the invention, now indicated by **30,** which differs from the multifunction device **1** due to the different configuration of its first shaped body **30a** and due to the different position of the second openings, now indicated respectively by **31** and **31a.**

In fact, as can be observed in Figure 7, the second openings are now positioned both on the first shaped body **30a,** where they are indicated by **31,** and on the second shaped body **32,** where they are indicated by **31a.** Operatively, and with reference to all the figures, the operation of the multifunction device **1, 30** takes place as explained below.

A user extracts the second shaped body **9, 32,** which can be removed by means of the grip **21,** and manually inserts the animal trap or bait T in the first chamber **13.**

Once the animal trap **T** has been introduced, the user inserts the second shaped body **9, 32** again through a sliding movement by inserting the grooves **10** in the side projections **11** of the housing **8** and locks the lock 17 with a key (not visible in the figures).

At this point, he/she can comfortably place a vase **V** or another object by resting it on the ribs **25** of the free surfaces **26,** with no need to touch the trap or bait **T** which remains housed in the first chamber **13.**

The animals, in particular rats, will enter through the second openings **16, 31** provided in the second shaped body **9, 32** being attracted by the animal bait **T.** The final configuration of the multifunction device **1** can be seen in Figure 8, where it can be observed that the second shaped body **9** is hidden inside the first shaped body **2** when coupled with the housing **8.** In this coupling configuration, the first shaped body **2** and the second shaped body **9** form a single body.

Obviously, the same applies also to the variant embodiment of the multifunction device **30** of Figure 7, even if it is not represented herein.

From the above, it can be inferred that the multifunction device according to the invention achieves the set object, that is, the object to provide a device that serves the function of an animal trap but does not allow said trap to be seen with the naked eye.

This object has been achieved by a multifunction device comprising a first shaped body which looks like a vase saucer and can be reversibly coupled with a removable second shaped body containing one or more animal traps or baits.

In this way, to advantage, the multifunction device according to the invention can be comfortably positioned where desired, hiding to the sight one or more animal traps contained therein.

Upon implementation, the multifunction device according to the invention can be subjected to modifications and/or changes which, although not described and not represented herein, must be considered protected by the present patent, provided that they fall within the scope of the following claims.

## Claims

1. Multifunction device (1; 30) comprising:
- a first shaped body (2; 30a) provided with:
▪ a base (3) designed to be rested on the ground;
▪ a supporting surface (4) opposite said resting base (3) and substantially parallel to the resting base (3) itself, said supporting surface (4) being delimited by a perimeter edge (7) that projects in the opposite direction with respect to said resting base (4) and being configured to support an object, preferably a vase (V);
▪ a housing (8) obtained between said resting base (3) and said supporting surface (4) and suited to receive a second shaped body (9; 32) that is reversibly coupled therewith;
- said second shaped body (9; 32), which is removable and configured in such a way that the following elements are defined inside it:
• at least one first chamber (13) suited to accommodate at least one animal trap (T);
• at least one second chamber (14) communicating with said at least one first chamber (13) through a first opening (15) and communicating with the external environment through at least one second opening (16; 31),
**characterized in that** said first opening (15) and said at least one second opening (16; 31) of said second shaped body (9; 32) extend according to distinct axes (X, Y, Z), in such a way as to define a non-rectilinear path between said first opening (15) and said at least one second opening (16; 31), said second shaped body (9; 32) being provided with a plurality of ribs (18) spaced from one another, each one of which extends starting from the base surface (20) of said second shaped body (9; 32) over the entire width of said non-rectilinear path, defining on said base surface (20) a plurality of zones (19a, 19b, 19c) that are adjacent to and distinct from one another.

2. Multifunction device (1; 30) according to claim 1, **characterized in that** said second shaped body (9; 32) is provided with reversible fixing means intended to prevent said second shaped body (9; 32) from becoming accidentally uncoupled from said housing (8).

3. Multifunction device (1; 30) according to any of the preceding claims, **characterized in that** the base surface (20) of said second shaped body (9; 32) has decreasing inclination from said first chamber (13) to said second chamber (14), when said second shaped body (9; 32) is inserted in said housing (8) provided in said first shaped body (2; 30a).

4. Multifunction device (1; 30) according to any of the preceding claims, **characterized in that** said second shaped body (9; 32) is provided with a grip (21) for its extraction from said housing (8) provided in said first shaped body (2; 30a).

5. Multifunction device (1; 30) according to any of the preceding claims, **characterized in that** said supporting surface (4) has a truncated cone-shaped outline with taper facing towards said resting base (3).

6. Multifunction device (1; 30) according to any of the preceding claims, **characterized in that** said supporting surface (4) is provided with a drainage opening (5) for draining liquid substances, said drainage opening (5) being normally closed by means of a removable cap (6).

7. Multifunction device (1; 30) according to any of the preceding claims, **characterized in that** said supporting surface (4) is provided with a plurality of ribs (25) projecting in the opposite direction with respect to said resting base (3) and spaced from one another, the free surfaces (26) of said ribs (25) being suited to support said object resting thereon.
